# EUROPEAN PATENT APPLICATION

(11) **EP 4 019 609 A1**
(43) Date of publication of application: **29.06.2022**
(21) Application number: 20217156.7
(22) Date of filing: 23.12.2020
(51) Int. Cl.: C09K 17/22, C05C 9/00, C05G 5/30

(54) **CROSS-LINKED HYDROGELS FOR CONTROLLED RELEASE OF FERTILISING AGENTS**

(71) Applicant: Syrmet A.E., 26221 Patra (GR)
(72) Inventor: KYRIOU, KALLIRROI, 26221 PATRA (GR); SYRIOPOULOS, GEORGIOS, 26221 PATRA (GR)
(74) Representative: Kosti, Vasiliki

(57) **Abstract**

The present disclosure relates to cross- linked hydrogels and their use in agriculture. In particular, the disclosure relates to gelatine-based hydrogels, cross- linked with a polymer and their use in the delivery of nutrients or fertilising active agents to plants and /or crops. Such gelatine- based hydrogels are cross- linked with the water- soluble copolymer poly(sodium4-styrenesulfonate-co-glycidylmethacrylate) (P(SSNa-co-GMA₂₀)) and contain encapsulated fertilising agents such as urea and/ or copper sulphate. Additionally, the present disclosure also relates to a use of such a cross- linked gelatine hydrogel for the controlled release of water and fertilising active agents into the soil and/or plants.

## Description

### FIELD OF THE INVENTION

The present invention relates to cross- linked hydrogels and their use in agriculture. In particular, the disclosure relates to gelatine-based hydrogels, cross- linked with a polymer and their use in the delivery of nutrients or fertilising active agents to plants and /or crops.

### BACKGROUND

Chemical fertilisers have become a necessity in modern agriculture in order to support the increasing, global demand for food. However, the use of a significant number of conventional chemical fertilisers is problematic and even non- accessible to crops, mainly due to losses from runoff. Nutrient runoff and excessive leaching are responsible for several environmental issues, including ground water and air pollution, river and lake eutrophication due to excessive algal blooming, soil acidification, salinization, and accumulation of toxic elements. On the other hand, in agricultural areas, the efficient distribution of water and fertilisers plays an important role in maintaining soil fertility, improving harvest quality and increasing production yield.

Consequently, a technology that allows for a controlled release of both water and plant nutrients into the soil is of utmost importance.

### SUMMARY

Provided herein is a controlled release fertilising system comprising a cross-linked hydrogel, wherein such hydrogel is capable of releasing water and one more fertilising active agents into the soil and/ or to plants.

In certain embodiments, said hydrogel is a gelatine- based hydrogel, chemically cross-linked with reactive water- soluble polymeric materials.

In certain embodiments, said gelatine hydrogel is chemically cross- linked with a water-soluble copolymer of the type poly(sodium4-styrenesulfonate-co-glycidylmethacrylate) (P(SSNa-co-GMAₓ)).

In certain embodiments, said gelatine hydrogel further comprises encapsulated plant fertilising active agents, preferably urea and/ or Copper Sulphate.

In certain embodiments, the current disclosure relates to the use of said cross- linked gelatine hydrogel for the controlled release of fertilising active agents to plants or crops.

### BRIEF DESCRIPTION OF THE DRAWINGS

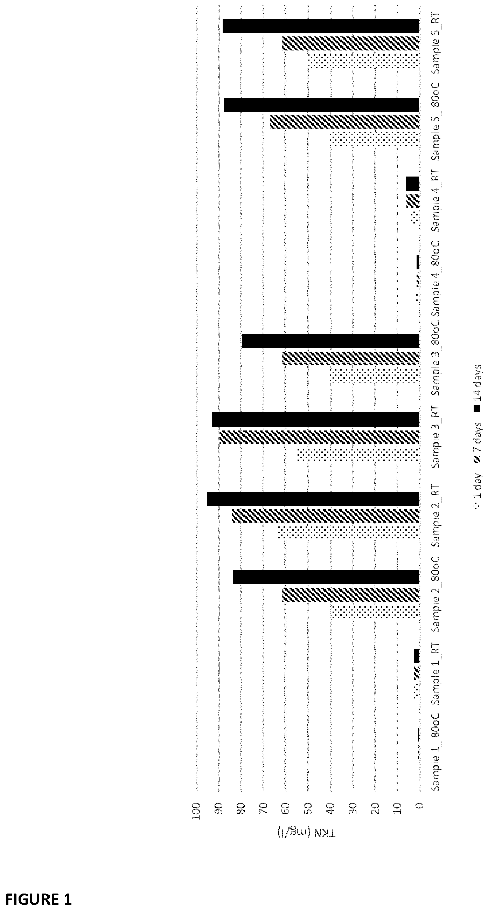

Figure 1 (Fig.1) shows the total Nitrogen released in 1 day, 7 days and 14 days from five different samples of a gelatine hydrogel, which was cross- linked with the copolymer (P(SSNa-co-GMA₂₀)), at room temperature or at 80° C for 24h. The total Nitrogen amount released was measured using Total Kjeldahl Nitrogen analysis.
Figure 2a-2b. Fig. 2a shows absorption spectra of gelatin cross -linked hydrogel Sample 2, recorded at room temperature, after 4h, 24h, 72h, 240h and 336h, in order to estimate the controlled release of urea. Fig. 2b shows a plot of A/A₀ for the same time intervals.
Figure 3a-3b. Fig. 3a shows absorption spectra of gelatin cross -linked hydrogel Sample 4, recorded at room temperature, after 4h, 24h, 72h, 240h and 336h in order to estimate the controlled release of Cu²⁺. Fig. 3b shows a plot of A/Aofor the same time intervals.
Figure 4a-4b. Fig. 4a shows absorption spectra of gelatin cross -linked hydrogel Sample 5, recorded at room temperature, after 4h, 24h, 72h, 240h and 336h in order to estimate the controlled release of urea and Cu⁺⁺. Fig. 4b shows a plot of A/A₀ for the same time intervals.

### DETAILED DESCRIPTION

The present invention provides fertilising systems that allow for controlled release of water and fertilising, active agents to the soil.

Specifically, subject of the invention is gelatine hydrogels, cross- linked with reactive water-soluble polymeric materials. Preferably, said gelatine hydrogels are cross- linked with a water- soluble copolymer of the type poly(sodium4-styrenesulfonate-co-glycidylmethacrylate) (P(SSNa-co-GMAₓ)) and more preferably said copolymer is (P(SSNa-co-GMA₂₀).

Hydrogels are polymer materials suitable for use as substrates with a great variety of applications due to their low mechanical characteristics and high hydrophilicity. They are three -dimensional macromolecular polymer networks, able to absorb a large quantity of aqueous solutions, without being subject to solubilisation.

Gelatine is a protein product of natural origin, derived from collagen; it is highly biocompatible, completely resorbable *in vivo,* inexpensive and readily available. It may also be referred to as hydrolysed collagen, collagen hydrolysate or gelatine hydrolysate.

Although gelatine can spontaneously form a gel in aqueous solution at low temperature (<5-10° C), it presents a thermo-reversible behaviour, which means it liquefies again at temperatures exceeding 30° C. Consequently, for it to be used for the formation of a hydrogel, it is necessary to increase its stability, under physiological conditions. Crosslinking, the formation of inter- and intra- molecular covalent bonds, is thus important to improve its properties, such as density, solubility and thermal and chemical stability.

Different methodologies are described in the scientific literature for the cross- linking of gelatine, using two different approaches, physical and chemical.

Physical cross- linking, by UV irradiation or heat treatment, presents the advantage of not introducing additional chemical agents, but it is not very effective and makes it difficult to control stability and density in the final matrix.

Chemical crosslinking includes the use of chemical agents and involves the formation of covalent bonds. One option is the modification of gelatine using chemical cross- linking with reactive water -soluble materials (Teramoto et al; Materials 2012 (5):2573-2585; Liguori et al; Materials 2019 (12):2808). In this approach, a reaction between gelatine's reactive groups and the functional groups of the water- soluble copolymers lead to the development of chemically cross-linked network hydrogels with enhanced mechanical stability and tunable properties. Additionally, such hydrogels can more easily be isolated, dried and used as solid fertilising carriers with *in situ* controllable swelling and active agent release.

Notably, protein- based hydrogels, such as gelatine hydrogels are promising materials for controlled- release applications in agriculture. Copolymers bearing functional groups cross-linked with the gelatine matrix efficiently incorporate the desired nutrients or fertilising active agents and act as biostimulators in controlled-release fertiliser technology (Liu et al; Polym. Adv. Technol, 2006 (17): 430-438; Guo et al; Ind. Eng. Che. Res. 2005 (44): 4206-4211). Such cross- linked hydrogels show high swelling capacity and high gel strength. Moreover, by encapsulating plant nutrients or fertilising active agents in the polymeric hydrogel, their release can be controlled according to the plants' needs.

Provided herein are gelatine hydrogels cross- linked with water soluble polymeric materials. Particularly, the polymeric material is a water- soluble copolymer; more particularly the water-soluble copolymer poly(sodium4-styrenesulfonate-co-glycidylmethacrylate) (P(SSNa-co-GMAₓ)); preferably said copolymer is (P(SSNa-co-GMA₂₀)). (P(SSNa-co-GMA₂₀)) is preferably selected as it combines the behaviour of a charged polyelectrolyte and water solubility with the reactive epoxy functional groups which facilitate the cross- linking reactions. Additionally, said copolymer is cost effective as its constituent monomers may be provided in bulk quantities and with low cost. The synthesis of (P(SSNa-co-GMAₓ)), as also the preparation of collagen hydrolysate -(P(SSNa-co-GMAₓ) cross- linked network hydrogels have been described previously (Tzoumani et al; Materials 2019 (12): 4067). Said copolymer when assessed for its cytotoxicity profile it was found not to be cytotoxic against fibroblasts of different origin, normal or pathologic, and it does not alter the cell' s morphology.

A further subject of the invention is gelatine cross-linked hydrogel comprising encapsulated plant nutrients or fertilising active agents. Plant nutrients may include but not limit to phosphates PO₄³⁻), ammonium nitrates, urea, copper sulphate etc.

Another subject of the invention is a method of controlled release of water and fertilising active agents into the soil using a cross- linked gelatine hydrogel.

In one embodiment, the present invention relates to a controlled release fertilising system comprising a cross-linked hydrogel, wherein such hydrogel is capable of releasing water and one more fertilising active agents into the soil.

In one embodiment, said hydrogel is a gelatine- based hydrogel, chemically cross-linked with reactive water- soluble polymeric materials.

In one embodiment, said gelatine hydrogel is chemically cross- linked with a water- soluble copolymer of the type poly(sodium4-styrenesulfonate-co-glycidylmethacrylate) (P(SSNa-co-GMAₓ)).

In one embodiment, said gelatine hydrogel is chemically cross- linked with the water-soluble copolymer poly(sodium4-styrenesulfonate-co-glycidylmethacrylate) (P(SSNa-co-GMA₂₀)).

In one embodiment, said gelatine hydrogel, which is chemically cross- linked with the water- soluble copolymer of the type poly(sodium4-styrenesulfonate-co-glycidylmethacrylate) (P(SSNa-co-GMA₂₀)), further comprises encapsulated nutrients or plant fertilising active agents.

In one embodiment, said gelatine hydrogel, which is chemically cross- linked with the water- soluble copolymer of the type poly(sodium4-styrenesulfonate-co-glycidylmethacrylate) (P(SSNa-co-GMA₂₀)), further comprises encapsulated nutrients or plant fertilising active agents, preferably urea and/or Copper Sulphate

In one embodiment, said gelatine hydrogel, which is chemically cross- linked with the water- soluble copolymer of the type poly(sodium4-styrenesulfonate-co-glycidylmethacrylate) (P(SSNa-co-GMA₂₀)), further comprises encapsulated nutrients or plant fertilising active agents, preferably urea and Copper Sulphate.

In one embodiment, said gelatine hydrogel, which is chemically cross- linked with the water- soluble copolymer of the type poly(sodium4-styrenesulfonate-co-glycidylmethacrylate) (P(SSNa-co-GMA₂₀)), further comprises encapsulated urea, wherein the quantity of urea is in the range of 18-20 % w/w.

In one embodiment, said gelatine hydrogel, which is chemically cross- linked with the water- soluble copolymer of the type poly(sodium4-styrenesulfonate-co-glycidylmethacrylate) (P(SSNa-co-GMA₂₀)), further comprises encapsulated Copper Sulphate, wherein the quantity of encapsulated Copper Sulphate is in the range of 5-7 % w/w.

In one embodiment, said gelatine hydrogel, which is chemically cross- linked with the water- soluble copolymer of the type poly(sodium4-styrenesulfonate-co-glycidylmethacrylate) (P(SSNa-co-GMA₂₀)), further comprises encapsulated urea, wherein the quantity of urea is in the range of 18-20 % w/w and encapsulated Copper Sulphate, wherein the quantity of encapsulated Copper Sulphate is in the range of 5-7 % w/w.

While the present invention has been described with reference to the specific embodiments thereof, it should be understood by those skilled in the art that various changes may be made and equivalents may be substituted without departing from the true spirit and scope of the invention using this disclosure as a guide. Having now described certain embodiments in detail, the same will be more clearly understood by reference to the following example, which is included for purposes of illustration only and is not intended to be limiting.

### EXAMPLE 1

### Controlled release of plant nutrients by gelatine hydrogels, cross- linked with (P(SSNa-co-GMA₂₀)) and containing encapsulated urea and/or Copper Sulphate.

### Materials

The monomers sodium 4-styrene sulfonate (SSNa), glycidyl methacrylate (GMA), the homopolymers poly(sodium 4-styrenesylfonate) (PSSNa), poly(acrylic acid) (PAA), poly(ethylene oxide) (PEO), copolymers poly (4-styrenesulfonic acid-co-maleic acid), sodium salt P(SSNa-co-MA), the initiator azobisisobutyronitrile (AIBN), as well as deuterium oxide (D₂O) were purchased from Sigma Aldrich GmbH. The solvents dimethylsulfoxide (DMSO) and acetone were purchased from Fisher Scientific. Polymer standards poly(ethyleneglycol/ethylenoxide) (PEO) were purchased from Polymer Laboratories LTD. Lithium nitrate (LiNO₃) was purchased from Merck KGaA. The 3-(4,5-dimethylthiazol-2-yl)-2.5-diphenyltetrazolium bromide (MTT) was purchased from Sigma Aldrich GmbH. The Dulbecco's modified Eagle's medium (DMEM) was from BioChrom AG. Gelatin from bovine skin (Type 2) was purchased from Sigma Aldrich GmbH. Urea was purchased from Serva. Copper Sulphate (CuSO₄) was purchased from Alfa Aesar. Ultra -pure water was obtained by means of an SG apparatus water purification unit from Rigas Labs.

### Methods

The synthesis of P(SSNa-co-GMA₂₀) copolymer, the modification of gelatine with P(SSNa-co-GMA₂₀) and the modification of gelatine with P(SSNa-co-GMA₂₀) and encapsulated nutrients were performed as described previously (Tzoumani et al; Materials 2019 (12): 40674; Lainioti et al; Polymers 2016 (8): 190: Druvari et al; ACS Appl. Mater. Interface 2016 (8): 35593-35605).

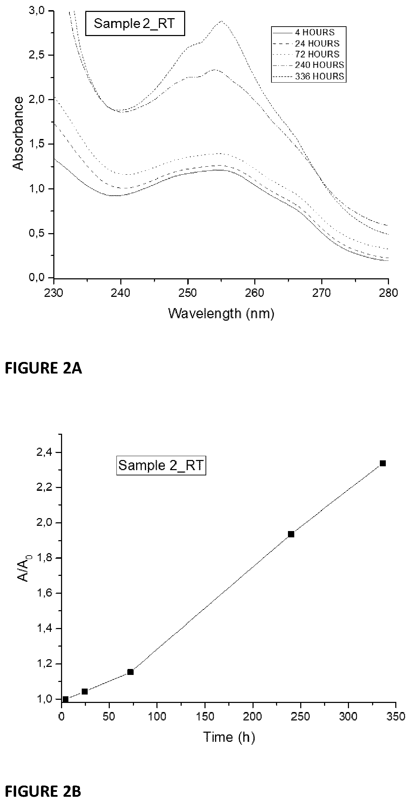

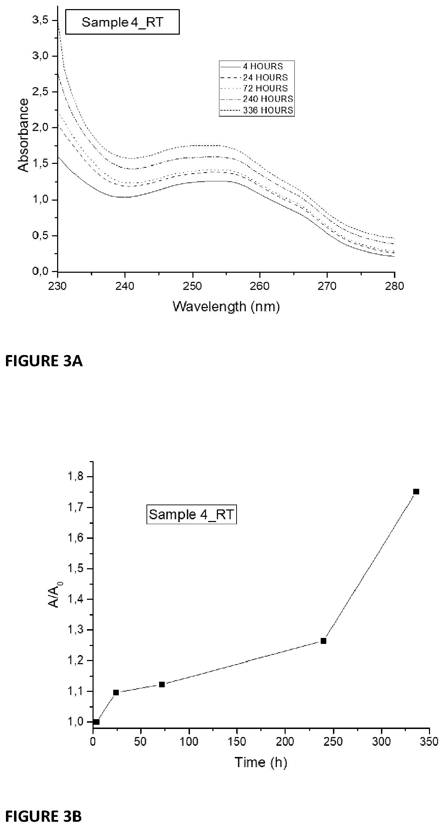

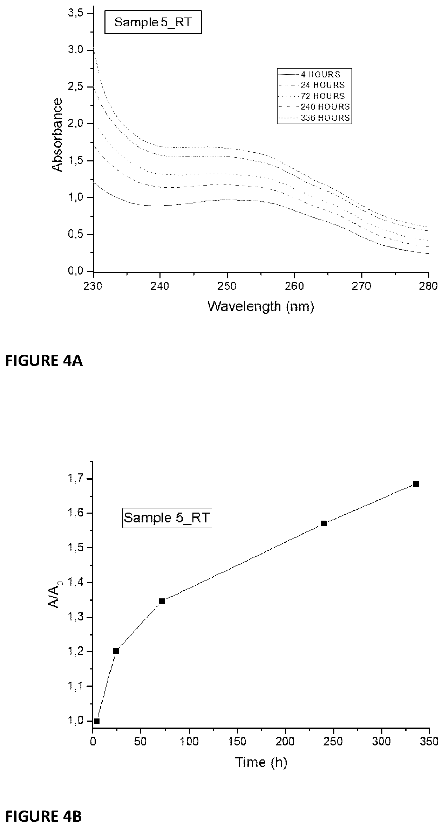

In brief, for the synthesis of the cross- linked hydrogels with the encapsulated nutrients of the present disclosure, gelatine (10% w/v aqueous solution) was mixed with P(SSNa-co-GMA₂₀) (1 % w/v aqueous solution) at the optimal ratio which was found to be 3.5/1 w/w. In some sample mixtures, it was also added the urea solution and/ or CuSO₄ solution. All sample mixtures were treated at room temperature or at 80°C for 24h, and the cross- linked membranes were tested in respect to their swelling ability leading to hydrogels with high swelling rates after immersion in distilled water. More specifically, the controlled release of the nutrients like urea and Cu²⁺ from the crosslinked gels was tested by immersion of the membranes in deionized H₂O at a gel content of 1% w/v for 4h, 24h, 72h, 240h and 336h. The absorbance of the resulting solution was measured by UV/Vis spectroscopy in order to estimate the released amount for each sample mixture. In particular, table 1 shows five different sample mixtures of P(SSNa-co-GMA₂₀)- cross- linked gelatine with or without encapsulated nutrients. Figures 2-4 show absorption spectra of three different gelatin cross- linked hydrogel samples, recorded at room temperature, after 4h, 24h, 72h, 240h and 336h in order to estimate the controlled release of nutrients. As it can be seen in these figures, the absorbance corresponding to both urea and copper at 230 to 280 nm increases over time. In particular, for sample mixtures Sample 2, Sample 4, Sample 5the maximum absorbance values for the different time intervals, at 254 nm are shown in Table 2. A₀ represents the absorbance measured after 4 hours (i.e. A/A₀ after 4 hours is equal to 1).

**Table 1**

| **Sample mixture** | **Gelatin (%w/w)** | **P(SSNa-co-GMA20) (%w/w)** | **Urea (%w/w)** | **CuSO4 (%w/w)** | **NaOH (%w/w)** |
|---|---|---|---|---|---|
| Sample 1 | 77,8 | 22,2 | - | - | - |
| Sample 2 | 62 | 18 | 20 | - | - |
| Sample 3 | 57,6 | 16,5 | 18,5 | 7,4 | - |
| Sample 4 | 70 | 20 | - | 6,6 | 3,4 |
| -Sample 5 | 57,2 | 16,3 | 18,4 | 5,4 | 2,7 |

**Table 2**

| **Sample** | **Time (h)** | **Absorbance** | **A/A₀** |
|---|---|---|---|
| Sample 2 | 4 | 1,2076 | 1 |
| | 24 | 1,2588 | 1,0424 |
| | 72 | 1,3925 | 1,15311 |
| | 240 | 2,3372 | 1,93541 |
| | 336 | 2,8239 | 2,33844 |
| Sample 4 | 4 | 1,2636 | 1 |
| | 24 | 1,3851 | 1,09615 |
| | 72 | 1,4191 | 1,12306 |
| | 240 | 1,5986 | 1,26512 |
| | 336 | 1,7520 | 1,38651 |
| Sample 5 | 4 | 0,9582 | 1 |
| | 24 | 1,1518 | 1,20205 |
| | 72 | 1,2907 | 1,347 |
| | 240 | 1,5045 | 1,57013 |
| | 336 | 1,6162 | 1,68670 |

Additionally, in order to determine the nitrogen released from the cross- linked hydrogels with the encapsulated nutrients, in various time intervals, a Kjeldahl analysis was performed according to standard methods in the state of the art. Briefly, samples prepared as described above, were immersed in distilled water for 1 day, 7 days and 14 days, at room temperature (RT). **Table 3** shows the Total Kjeldahl Nitrogen (TKN, mg/L) released for ten different samples. The analysis revealed that all tested samples released about 50% of its content in nitrogen within the first day and reached about 90% in two weeks. After two weeks, what it remains is about 10% of nitrogen, in order to be released within the next weeks.

**Table 3**

| **TKN (mg/L)** | | | | |
|---|---|---|---|---|
| | **Samples** | **1 day** | **7 days** | **14 days** |
| 1 | Sample 1_80°C | 0,56 | 0,56 | 0,61 |
| 2 | Sample 1_RT | 2,24 | 2,24 | 2,25 |
| 3 | Sample 2_80°C | 39,2 | 61,6 | 83,5 |
| 4 | Sample 2_RT | 63,84 | 84 | 95,1 |
| 5 | Sample 3_RT | 54,88 | 89,6 | 93,1 |
| 6 | Sample 3_80°C | 40,32 | 61,6 | 79,5 |
| 7 | Sample 4_80°C | 1,68 | 1,12 | 1,15 |
| 8 | Sample 4_RT | 3,92 | 5,6 | 6,1 |
| 9 | Sample 5_80°C | 40,88 | 67,2 | 87,5 |
| 10 | Sample 5_RT | 50,4 | 61,6 | 88,3 |

## Claims

1. A controlled release fertilising system comprising a gelatine-based hydrogel, wherein said hydrogel is cross-linked with a copolymer of the type poly(sodium4-styrenesulfonate-co-glycidylmethacrylate) (P(SSNa-co-GMAx)) and further comprises encapsulated urea and/or copper sulphate as plant fertilising agents.

2. The controlled release fertilising system of claim 1, wherein the copolymer for the crosslinking of gelatine is poly(sodium4-styrenesulfonate-co-glycidylmethacrylate) (P(SSNa-co-GMA₂₀))

3. The controlled release fertilising system of claim 1 or 2, wherein the encapsulated fertilising agent is urea.

4. The controlled release fertilising system of claim 1 or 2, wherein the encapsulated fertilising agent is copper sulphate.

5. The controlled release fertilising system of claim 1 or 2, wherein the encapsulated fertilising agent is urea and copper sulphate.

6. Use of a cross- linked gelatine hydrogel according to anyone of claims 1 to 5 for the controlled release of fertilising active agents to plants or crops.
